Europäisches Patentamt

European Patent Office

Office européen des brevets

(11) Publication number: **0 060 578**
A1

# EUROPEAN PATENT APPLICATION

(21) Application number: **82200219.2**

(22) Date of filing: **23.02.82**

(51) Int. Cl.³: **E 02 D  29/06,** E 02 D  17/18, E 02 D  27/52, E 02 B  3/10

(30) Priority: **13.03.81  NL 8101222**

(43) Date of publication of application: **22.09.82**
**Bulletin 82/38**

(84) Designated Contracting States: **AT BE CH DE FR GB IT LI LU NL SE**

(71) Applicant: **Akzo N.V., Velperweg 76, NL-6824 BM Arnhem (NL)**

(72) Inventor: **Voskamp, Willem, Maasoord 27, NL-3448 BM Woerden (NL)**

(74) Representative: **Sieders, René et al, P.O. Box 314, NL-6800 AH Arnhem (NL)**

(54) Method of forming an elevation partially or entirely under water, an elevation formed by this method and a boundary means to be used for the formation of the elevation.

(57) The invention relates to a method of constructing an underwater dam or other elevation by depositing sand fed under pressure. To that end a water-permeable, but sandtight membrane (1, 19) is placed on the seabed (2). The membrane (1, 19) is placed on the seabed (2) at a sharp angle therewith, which angle approximately corresponds to the angle of inclination of the natural slope of the dam. The method according to the invention is particularly suitable to be used for constructing an artificial island.

Method of forming an elevation partially or entirely under water, an elevation formed by this method and a boundary means to be used for the formation of the elevation

The invention relates to a method of forming an elevation partially or entirely under water, such as a dam or an artificial island, from granular material, such as sand or the like.

A method of the type indicated above is generally known. The sand used for forming the elevation is generally supplied under pressure through a pipe line for a water-sand mixture or from hopper barges. A problem to this known method is that the resulting freely formed slope has only a relatively low angle of repose. Pumping sand having an average particle size of 200 μm to some surface to be raised will lead to an elevation having a gradient of 1 in 10 to 12; and use of a pontoon with a chute will give a gradient of 1 in 7 to 8. This means that because of the relatively slight incline thus obtained, elevation to some height by the known method will require the use of an unduly large amount of sand. Furthermore, the formation by the known method of an elevation of considerable height of, say up to 5 to 75 m above the level of a seabed, will take up much time. The time required will play a particularly important role considering that oil exploration and extraction is often practised these days on seas where no use can be made of the conventional drilling platform, which is substantially formed of a concrete or steel structure placed on the seabed, and where the number of working days is necessarily restricted because of severe weather conditions.

The invention has for its object to provide a method of the type indicated above which no longer shows the afore-mentioned disadvantages. The method of forming an elevation partially or entirely under water, such as a dam or an artificial island, from granular material, such as sand or the like, at the side of which elevation there is placed a boundary means extending upwardly from the underwater base of the elevation, against which the slope of the elevation is formed by supplying granular material, characterized according to the invention in that as boundary means there is used a water-permeable, but substantially sandtight membrane. The method according to the invention is advantageously characterized in that the membrane is so positioned that at the side of the elevation it makes a sharp angle α with the base of the elevation, which angle approximately corresponds to or is somewhat smaller than the angle of repose of the natural slope of the sand under water. In a preferred embodiment according to the invention said sharp angle is smaller than 45°, and more particularly said angle is in the range of 20° to 30°. An effective embodiment of the method·according to the invention is characterized in that a boundary means is placed at two or more opposite sides of the elevation to be formed, after which sand is supplied between opposite boundary means. A particular provision according to the invention consists in that the boundary means is placed all around the elevation to be formed. The boundary means or screens being placed under water at an angle with the horizontal makes it possible to form an elevation of sand having a slope which is considerably steeper than that obtained with the known method in the absence of a screen or boundary means. When the screen according to the invention is placed at an angle α which is somewhat lower than that of the natural slope, then in the final stage upon completion of the elevation there will be formed a slope which is stable as such and the screen has no function as far as force or equilibrium is concerned. For the resulting elevation, such as a dam or an artificial island, can very well withstand impact by ships or icebergs and against iceflow pressure.

Particularly, iceberg impact and the pressure from drifting ice form a potential danger to artificial islands of sand in the seas bordering the northern part of Canada. An important advantage to the steeper structure according to the invention consists in the considerable reduction in the amount of sand required, as a result of which the building time required by the present method may be considerably shorter than when use is made of the conventional method in the absence of boundary means or screens. Shortening of the building time constitutes a particularly important advantage in constructing a dam or an artificial island in the sea, in view of the number of working days at sea invariably being restricted because of weather conditions.

According to the invention the opposite boundary means may with advantage be interconnected at the base of the elevation to be formed. More particularly, the method according to the invention may be characterized in that there is placed a boundary means in the form of a water-permeable and practically sandtight bag whose bottom extends over the base of the elevation to be formed, after which the elevation is formed by filling the bag with sand through its open top. According to the invention the elevation may be formed introducing a sand-water mixture into the space between the boundary means while pumping it through a pipe line or feeding it from a pontoon provided with a chute.

An effective embodiment of the method according to the invention is characterized in that use is made of a boundary means which is formed by a fabric strengthened or not with reinforcing strips, preferably a woven or non-woven material composed of synthetic yarns.

According to the invention the boundary means are at their lower edges near the base of the elevation to be formed attached to the bottom by means of anchors, weights, long-shaped sacks of sand and the like. According to the invention the screens or boundary means are kept in their proper positions at their upper edges by such means as pontoons, cables, floats or the like, making it possible for the sand for forming the elevation to be introduced into the space between the screen. As the sand is being supplied, the screens or boundary means act as a kind of shuttering. The resulting water flow pattern created between the screens will cause the sand rapidly to sink so that it will not be spread over a large surface area under the influence of external water pressure.

The method according to the invention can be carried out in a simple manner when at the spot of the elevation to be formed the boundary means are deposited with the aid of a vessel from which the boundary means, which may for instance be in the form of a folded bag, may be laid on the seabed while unwinding them from a roll. The bottom fabric may be detached ot be attached to the wall screens and serves, int. al., to enhance the stability of the sand body and to prevent sand from being forced through the bottom of the bag when it is placed on soft layers of ground.

The invention also comprises an elevation of sand which is entirely or partially positioned under water, such as a dam or an artificial island

0060578
AKU 1853 R

formed by the method of the invention. The invention also comprises a boundary means formed by a fabric destined for constructing an elevation to be formed from sand, such as a dam or an artificial island. According to the invention the fabric may be formed of synthetic yarns, such as nylon, polyester or polypropylene. The fabric may be a woven or non-woven material. According to the invention the fabric is a sandtight, but water-permeable material.

The invention will be further described with reference to the accompanying schematic drawing.

Figure 1 shows the unrolling of a boundary means in the form of a bag.

Figure 2 is a plan view of the unrolled bag, which is still in the folded state.

Figure 3 is a view in longitudinal section of the bag along the line III-III in Figure 2 in a plane perpendicular to the seabed.

Figures 4, 5 and 6 are sectional views along the lines IV-IV, V-V and VI-VI, respectively of Figure 3 in various stages of the bag laying process.

Figure 7 shows the boundary means in the state ready for the supply of sand.

Figure 8 shows a dam according to the invention.

Figure 9 is a plan view of a bag of some fabric for use in the construction of an artificial island.

Figure 10 shows the bag according to Figure 9 in the unfolded state.

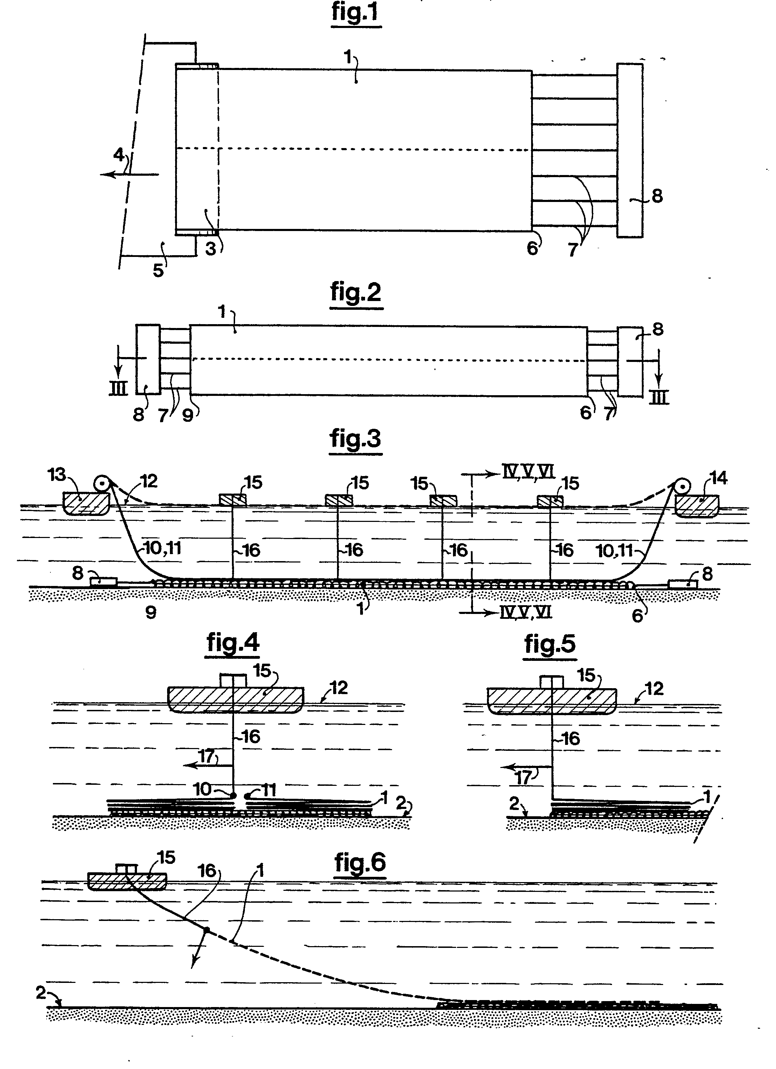

Figure 1 shows the situation during the unrolling of a folded bag 1 over the seabed 2 on which an elevation of sand is to be formed.

The bag 1 is unrolled from a roll 3, which has an axial length of 30 m, and a starting diameter of 7 m. The actual bag has a length of 300 m and a width of 30 m. The roll 3 is appropriately placed at the back or the side of the vessel 5 which is slowly moving in the direction indicated by the arrow 4. Before the vessel 5 can start moving the end 6 of the folded bag 1 shown in Figure 1 must be attached to the bed 2 at a proper point by means of strips 7 and an anchor block 8.

Figure 2 shows the situation in which the bag 1 in the folded state is unrolled over the bed over its full length of 300 m. The vessel 5 is no longer shown. Also the other end 9 of the bag is now attached to the seabed 2 with the aid of strips 7 and an anchor block 8.

Figure 3 is a view in longitudinal section of the folded bag 1 along the line III-III of Figure 2. The two steel cables 10 and 11, which extend along the two upper edges of the bag 1, are attached to the pontoons 13 and 14 above the water surface 12. Between the pontoons 13 and 14 are a number of floats 15, which are each attached to the cables 10 or 11 by means of auxiliary cables 16 (see Figure 4). When the floats 15 attached to the cable 10 are displaced sideways in the direction indicated by an arrow 17, the bag 1 is pulled open at its upper edge by the cable 10. As soon as the floats 15 attached to the cable 11 are displaced sideways in the direction opposite to that indicated by the arrow 17, the bag 1 is completely opened at its upper edge by the cable 11, as is successively indicated in the Figures 4, 5 and 6. Unfolding may be simplified by tautening the cables 10 and 11 with the aid of winches.

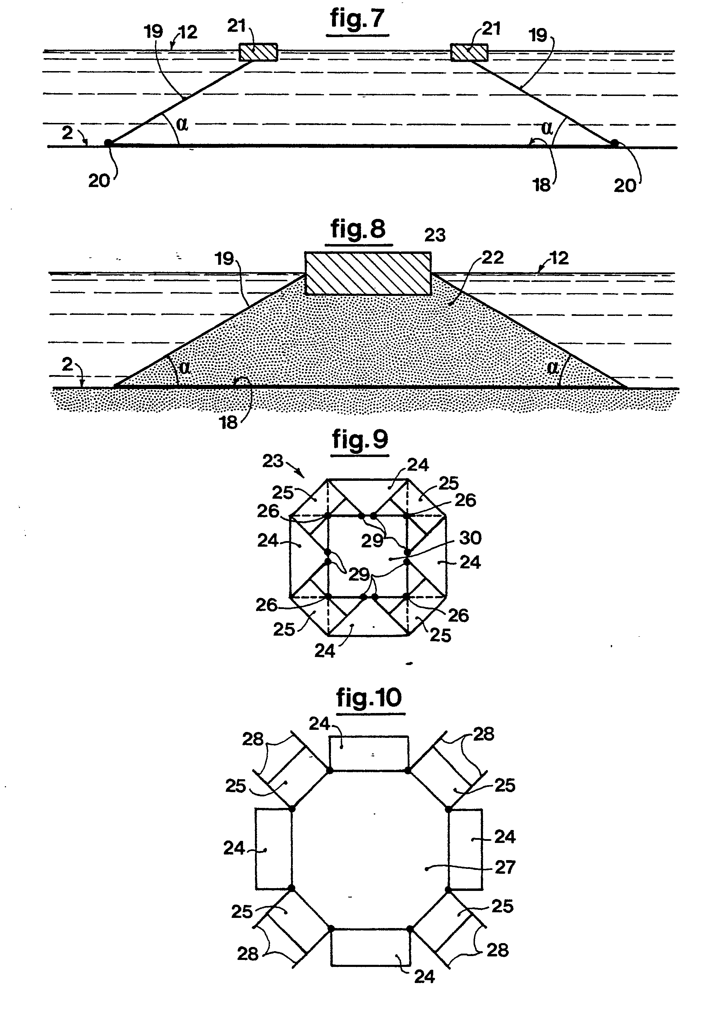

Figure 7 shows the bag in the final state ready for receiving the sand. The bottom 18 of the bag is formed by a water-permeable, but practically sandtight synthetic fabric which rests on the seabed 2. The sides 19 of the bag form the said boundary means or membranes, which make a sharp angle $\alpha$ with the base of the elevation to be formed. At their lower ends the membranes 19, which are also water-permeable and sandtight, are secured to the seabed 2 with anchors 20 and they are formed integral with the bottom fabric 18. In the case of an elongated elevation or dam the two boundary means 19 together with the bottom fabric 18 attached to it form a long-shaped bag with an open top. The top ends of the boundary means are kept in their correct positions by means of pontoons 21. The space enclosed by the boundary means 19 and the bottom 18 of the bag can subsequently be filled with sand pumped through a pipe line feeding a sand-water mixture or with the aid of hopper barges or pontoons with chutes, with the water excaping sideways through the boundary means 19.

Figure 8 is a cross-sectional view of a dam consisting of a sand body 22, corresponding parts being referred to by like numerals. An artificial island formed according to the invention has the same cross-sectional shape but different dimensions. On the sand body there is placed a schematically indicated concrete block 23, which serves to bear another structure, such as a drilling platform (not shown), which is
mainly of steel generally.

Figure 9 is a schematic plan view of a bag 23 of a water-permeable,
practically sandtight, synthetic fabric for constructing an artificial
island, which may measure of from a few hundred up to a few thousand
meters round its circumference. The bag and the artificial island to be
formed with it have a polygonal contour. Figure 10 shows the bag according to Figure 9 still in the open state. When preparing the bag according to Figures 9 and 10 first the flaps 24 are folded inwards and their
upper edges are attached to each other at the points 26, with the flaps
24 then also forming said sharp angle of 20°-30° with the bottom 27 of
the bag. Subsequently, the flaps 25 are folded inwards, as a result of
which they come to lie over the previously folded flaps 24. Both the
flaps 24 and the flaps 25 are provided all along their four sides with
cables with which they may be secured. More particularly, at their two
short sides the flaps 25 are provided with extended cable parts 28,
with which the flaps 25 can be attached to the upper edge of the folded
bag at the points 29. Consequently, the folded flaps 24 and 25 can be
attached to each other mainly with cables, which may still be passed
through a number of eyes, if required. Alternatively, the flaps may be
sewn together. After the flaps 24 and 25 have been folded inwards, they
form the lateral boundary means of the artificial island to be formed.
Finally, the bag 23 resting on the seabed is to be filled with sand
through an opening 30, after which the elevation may serve as a foundation for a concrete or steel structure.

It should be added that NL 7 204 805 describes a method of constructing
an underwater foundation which, too, comprises feeding sand into the
water. In the construction proposed the deposited sand is to be confined by means of a strip of artificial sea-weed. Although this known
method might give some improvement, the sand is enclosed too little if
at all, which therefore does not lead to any considerable reduction in
the amount of sand required for forming a dam or an artificial island.

Mention is also made of US 4 103 502, US 4 009 580 and NL 7 703 104, and NL 7 505 974; which also describe methods of constructing an artificial island on the bottom of the sea. With these known methods use is generally made of closed watertight bags which are filled with sand and from which the water is removed by pumping. The stability obtained with these methods results from the external hydrostatic, pressure exerted on the bags filled with sand. These known methods are rather complicated and costly and there is generally the unacceptable risk to them that damage of the wall of the bag, for instance, caused by some collision, will result in total loss of stability.

The life of the artificial islands or the like obtained with these known methods wholly depends on the life and the vulnerability of the material of the wall of the watertight bags.

NL 7 810 543 describes a civil engineering construction, such as a dam. In that case the dam consists of at least one series of stacked bags filled with pebbles, sand or broken stones, bags having a convex contacting surface alternating with bags having a concave contacting surface. Constructing a dam with these special bags, or using the traditional sand bag system, is rather labour intensive and costly. Moreover, proper stacking of specially shaped bags in greater water depths is a very difficult operation.

NL 7 712 587 describes an apparatus for forming a dam. This known apparatus substantially consists of a kind of sliding construction composed of two converging side walls which are at a sharp angle with the bottom and are provided with a transversely positioned end wall. At the open top of this construction a mixture of sand and water is introduced between the side walls. The side walls and the end wall of the sliding construction are both watertight and sandtight. Because of the difference between the level of water inside and outside this construction there will be created a pressure difference perpendicular to the end wall of the construction, as a result of which a forwarding movement may be imparted to it. With this known apparatus it is only possible to construct dams of fairly short lengths in relatively low water depths.

Within the scope of this invention various modifications may be introduced.

0060578

AKU 1853 R

CLAIMS

1. A method of forming an elevation partially or entirely under water, such as a dam or an artificial island, from granular material, such as sand or the like, at the side of which elevation there is placed a boundary means extending upwardly from the underwater base of the elevation, against which the slope of the elevation is formed by supplying the granular material, characterized in that as boundary means there is used a water-permeable, but substantially sandtight membrane.

2. A method according to claim 1, characterized in that the membrane is so positioned that at the side of the elevation it makes a sharp angle α with the base of the elevation.

3. A method according to claim 2, characterized in that said sharp angle approximately corresponds to or is somewhat smaller than the angle of repose of the natural slope of the sand or like material under water.

4. A method according to claim 2, characterized in that said sharp angle is smaller than 45°, and preferably is in the range of 20° to 30°.

5. A method according to one or more of the preceding claims, characterized in that a boundary means is placed at two or more opposite sides of the elevation to be formed, after which granular material is supplied between opposite boundary means.

6. A method according to one or more of the preceding claims, characterized in that the boundary means is placed all around the elevation to be formed, after which sand or like material is introduced into the space enclosed by the boundary means.

7. A method according to claim 5 or 6, characterized in that opposite boundary means are interconnected at the base of the elevation to be formed.

8. A method according to one or more of the preceding claims, characterized in that there is placed a boundary means in the form of a water-permeable and practically sandtight bag whose bottom extends over the base of the elevation to be formed, after which the elevation is formed by filling the bag with sand through its open top.

9. A method according to one or more of the preceding claims, characterized in that the elevation is formed by pumping a sand-water mixture through a pipe line into the space between the boundary means.

10. A method according to one or more of the claims 1 to 8, characterized in that the elevation is formed by feeding the sand to the space between the boundary means from a hopper barge or a pontoon provided with a chute.

11. A method according to one or more of the preceding claims, characterized in that use is made of a boundary means formed by a fabric, which is preferably composed of synthetic yarns.

12. A method according to claim 11, characterized in that use is made of a fabric provided with reinforcing strips.

13. A method according to one or more of the preceding claims, characterized in that at the base of the elevation to be formed the boundary means are at their lower edge near the base of the elevation to be formed secured to the bottom for instance by anchors.

14. A method according to one or more of the preceding claims, characterized in that the boundary means are kept in their proper positions at their upper edges by such means as pontoons, cables or like means, after which the sand for forming the elevation is supplied.

15. A method according to one or more of the preceding claims, characterized in that at the spot of the elevation to be formed the boundary means are deposited with the aid of a vessel from which the boundary means, which may for instance be in the form of a folded bag, may be laid on the bottom while unwinding them from a roll.

16. An elevation which is substantially composed of sand or like material and is entirely or partially positioned under water, such as a dam or an artificial island, characterized in that the elevation is made by the method according to one or more of the claims 1-15.

17. A boundary means formed by a fabric, more particularly of a synthetic material, destined for constructing an elevation to be formed from sand, according to claim 16.

fig.1

fig.2

fig.3

fig.4        fig.5

fig.6

**fig.7**

**fig.8**

**fig.9**

**fig.10**

0060578

European Patent
Office

EUROPEAN SEARCH REPORT

Application number

EP 82 20 0219

| Category | Citation of document with indication, where appropriate, of relevant passages | Relevant to claim | CLASSIFICATION OF THE APPLICATION (Int. Cl. 3) |
|---|---|---|---|
| X | NL - C - 863 (DEN TEX)<br>* Page 1, lines 25-62; page 2, lines 1-35; figures 1,2,3 * | 1,2,5,<br>6,7,8,<br>9,13,<br>16 | E 02 D 29/06<br>17/18<br>27/52<br>E 02 B 3/10 |
| X | FR - A - 2 001 333 (COLLINS)<br>* Page 2, lines 36-40; page 3, lines 1-21; page 4, lines 13-18; page 6, lines 10-19; page 7, lines 10-16; page 8, lines 3-30; page 10, lines 16-40; page 11, lines 1-17; figures 1 to 10 * | 1,6,7,<br>10,11,<br>12,16,<br>17 | |

**DOCUMENTS CONSIDERED TO BE RELEVANT**

**TECHNICAL FIELDS SEARCHED (Int.Cl. 3)**

E 02 D
E 02 B

| Category | Citation | Relevant to claim |
|---|---|---|
| Y | US - A - 4 081 970 (GOLDER HOEK)<br>* Column 1, lines 24-53, 59-60; column 2, lines 39-63; figures 1 to 4 * | 1,4,5,<br>6,8,9,<br>14,15,<br>16 |
| D | & NL - A - 7 703 104 | |
| Y | DE - A - 2 747 507 (HOECHST)<br>* Page 3, lines 7-16,24-28; figures 1,2 * | 1,16,<br>17 |
| D | & NL - A - 7 810 543 | |
| A | GB - A - 1 460 529 (GOLDER HOEK)<br>* Page 1, lines 15-30, 40-56, 65-76, 85-98; page 2, lines 1-6; figures 1,2,3 * | 1,5,6,<br>9,15,<br>16 |
| D | & US - A - 4 009 580 | |

./.

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 19-04-1982 | RUYMBEKE |

EPO Form 1503.1 06.78

| Category | Citation of document with indication, where appropriate, of relevant passages | Relevant to claim |
|---|---|---|
| | & NL - A - 7 505 974 | |
| A | FR - A - 2 371 551 (NATIONAL RESEARCH DEVELOPMENT) | |
| | * Page 3, lines 38-39; page 4, lines 1-8, 13-23; page 5, lines 1-8, 38-39; page 6, lines 1-11; figures 1 to 5 * | 1,2,4, 5,6, 16 |
| D | & NL - A - 7 712 587 | |
| A | GB - A - 1 208 205 (TORAY) | |
| | * Page 1, lines 68-92; page 2, lines 1-43, 77-93; figures 1 to 5 * | 11,12 |

**DOCUMENTS CONSIDERED TO BE RELEVANT**

CLASSIFICATION OF THE
APPLICATION (Int. Cl.³)

TECHNICAL FIELDS
SEARCHED (Int. Cl.³)

EPO Form 1503.2    06.78